# EUROPÄISCHE PATENTSCHRIFT

(11) **EP 0 581 162 B1**
(45) Veröffentlichungstag und Bekanntmachung des Hinweises auf die Patenterteilung: **02.10.1996**
(21) Anmeldenummer: 93111562.0
(22) Anmeldetag: 19.07.1993
(51) Int. Cl.: F16L 3/01, H02G 11/00

(54) **Schleppkettenersatz mit Feder**
Supporting chain replacement with spring
Remplacement pour chaînes de guidage avec ressort

(30) Priorität: 27.07.1992 DE 9210074 U
(43) Veröffentlichungstag der Anmeldung: 02.02.1994
(73) Patentinhaber: W.L. GORE & ASSOCIATES GmbH, 85640 Putzbrunn (DE)
(72) Erfinder: Haiduk, Herbert, D-91785 Pleinfeld (DE)
(74) Vertreter: Klunker . Schmitt-Nilson . Hirsch

(56) Entgegenhaltungen:
- EP-A- 0 096 091
- GB-A- 1 397 575
- GB-A- 2 014 268

## Beschreibung

Die Erfindung betrifft einen Schleppkettenersatz in Form einer Leitungsanordnung mit einem ersten Trum und einem parallel dazu verlaufenden zweiten Trum, wobei die beiden Trumenden mit einer feststehenden Einrichtung bzw. mit einer in Längsrichtung der Leitungsanordnung hin- und herbeweglichen Einrichtung verbunden sind und die beiden Trums dazwischen bogenartig ineinander übergehen und wobei die Leitungsanordnung mit einer die beiden Trums auf Abstand voneinander haltenden Federeinrichtung versehen ist, die sich in Längsrichtung der Leitungsanordnung mit dieser miterstreckt und hierzu in einer entlang der Leitungsanordnung verlaufenden Federaufnahmekanaleinrichtung angeordnet ist.

Mit einem derartigen Schleppkettenersatz lassen sich herkömmliche Schleppketten ersetzen, die aufwendig sind, zu einer erheblichen mechanischen Belastung der in ihr geführten Leitungen führen können und die im Bewegungsbetrieb störende Geräusche verursachen können.

Aus der DE-A-1 675 330 ist ein Schleppkettenersatz der eingangs angegebenen Art bekannt, bei dem die Leitungsanordnung ein Kabelführungsrohr aus Kunststoff mit einem rechteckigen oder ovalen Querschnitt aufweist, in dem mehrere nebeneinander liegende Leitungen angeordnet sind. An der Innenseite oder an der Außenseite der beiden sich gegenüberliegenden Breitwandseiten des Kabelführungsrohres ist je ein sich in Längsrichtung des Kabelführungsrohres erstreckendes, die zugehörige Breitwand des Kabelführungsrohres elastisch verstärkendes Federband aus Federstahl angeordnet, dessen Breite im wesentlichen der Breite der zugehörigen Breitwand des Kabelführungsrohres entspricht.

Die Elastizität des Kabelführungsrohres und der beiden Federbänder setzt der Umbiegung der Leitungsanordnung an dem bogenartigen Übergang zwischen den beiden Trums einen federelastischen Widerstand entgegen. Die Federkraft versucht, die gesamte Leitungsanordnung in eine Ebene zurückzubiegen. Dieses Rückbiegebestreben führt dazu, daß die beiden Trums auf Abstand voneinander gehalten werden. Dadurch wird vermieden, daß die beiden Trums aneinander liegen und während der Bewegung der beweglichen Einrichtung aneinander reiben. Beispielsweise in dem häufigsten Fall, daß die beiden Trums horizontal verlaufen, wird durch die Federbänder vermieden, daß sich das obere Trum auf dem unteren Trum ablegt und während einer Bewegung der beweglichen Einrichtung das obere Trum reibend über das untere Trum geschoben wird. Dies würde nicht nur eine erhöhte Kraft für die Bewegung der beweglichen Einrichtung erforderlich machen, sondern könnte die Leitungsanordnung beschädigen. Die beiden Federbänder bewirken aber, daß die beiden Trums voneinander weg streben, wodurch die unerwünschte Reibung zwischen den beiden Trums verhindert wird.

Ein Schleppkettenersatz gemäß der genannten Druckschrift ist allerdings bis zu seiner Installation schwer handhabbar und die Federbänder müssen relativ genau auf die Länge, das Gewicht und die Eigenelastizität des Kabelführungsrohres und der darin geführten Leitungen abgestimmt werden. D.h., für unterschiedliche Längen und/oder unterschiedliche Arten von Kabelführungsrohren und darin geführten Leitungen müssen unterschiedlich dimensionierte Federbänder verwendet werden.

Der Erfindung liegt die Aufgabe zugrunde, einen Schleppkettenersatz der eingangs angegebenen Art verfügbar zu machen, der diese Schwierigkeiten überwindet, insbesondere bis zur und bei der Installation leichter handhabbar ist und während der Installation auf die Gegebenheiten der jeweiligen speziellen Leitungsanordnung eingestellt werden kann.

Die Lösung dieser Aufgabe besteht erfindungsgemäß darin, daß die Federeinrichtung durch mindestens eine in Längsrichtung der Leitungsanordnung vorspannbare Zugfeder gebildet ist. Dies kann vorzugsweise eine Schraubenfeder sein.

Im Fall eines Rundkabels ordnet man vorzugsweise einen zentralen Federaufnahmekanal für eine einzige Zugfeder an, wobei die einzelnen Leiter des Rundkabels beispielsweise koaxial um den Federaufnahmekanal herum angeordnet sind. Bei einem Rundkabel größeren Durchmessers könnte man auch stattdessen oder zusätzlich Federaufnahmekanäle mit darin geführten Zugfedern an diametral gegenüberliegenden Seiten des Rundkabels vorsehen.

Im Fall von Bandkabeln sind zwei je eine Zugfeder aufnehmende Federaufnahmekanäle vorgesehen, die an den beiden Längsseiten angeordnet sind. Die Federaufnahmekanäle werden vorzugsweise in Kunststoffmaterial des Kabels extrudiert. Es besteht auch die Möglichkeit, die Kabelkanäle durch Schläuche zu bilden, die in das Kunststoffmaterial des Kabels eingebettet sind.

Für bewegliche Einrichtungen, die sich in einer horizontalen Ebene hin- und herbewegen, verlaufen die beiden Trums ebenfalls horizontal, mit einem Abstand voneinander. In diesem Fall werden die Zugfeder bzw. Zugfedern auf eine derartige auf die Leitungsanordnung einwirkende Zugspannung vorgespannt, daß das Gewicht des oberen Trums bei dessen maximaler freier Länge einerseits und die Vorspannkraft der Zugfeder bzw. Zugfedern und die elastische Rückstellkraft der bogenförmig umgebogenen Leitungsanordnung andererseits nahezu ausgeglichen sind, mit einem gewissen Überwiegen Zugkraft.

Besonders vorteilhaft ist bei dem erfindungsgemäßen Schleppkettenersatz, daß die Zugfeder bzw. Zugfedern bis zur Montage am Einsatzort, d.h. bis zur Verbindung der Leitungsanordnung mit der feststehenden Einrichtung einerseits und mit der beweglichen Einrichtung andererseits, im nicht gespannten Zustand bleiben können. Dies erleichtert wesentlich die Handhabung der Leitungsanordnung. Denn sie läßt sich vor dem Spannen der Zugfedern wie eine normale Leitungsanordnung handhaben, d.h., auslegen, zusammenlegen usw. Erst während der Montage wird das Spannen der Zugfeder bzw. Zugfedern durchgeführt. Vorteilhaft kommt noch hinzu, daß dieses Spannen in Abstimmung auf die besonderen Anforderungen und Gegebenheiten des jeweils zu montierenden Schleppkettenersatzes durchgeführt werden kann. Je nach Länge, Gewicht und Eigenelastizität der Leitungsanordnung können die Zugfeder bzw. Zugfedern exakt auf den Wert vorgespannt werden, der zu einem optimalen Verhalten des Schleppkettenersatzes führt.

Bei der bekannten Lösung mit Federbändern dagegen muß für jeden individuellen Schleppkettenersatz anhand von dessen speziellen Parametern genau die erforderliche Federkraft der Federbänder berechnet oder ermittelt werden. Fehlberechnungen, Fehlermittlungen und Toleranzen können nachträglich nicht korrigiert bzw. aufgefangen werden. Dagegen braucht bei der erfindungsgemäßen Lösung nur die Federvorspannung geändert zu werden, wenn sich im Probebetrieb erweist, daß der Schleppkettenersatz noch nicht optimal funktioniert.

Vorzugsweise ist an dem mit der festen Einrichtung und/oder an dem mit der beweglichen Einrichtung verbundenen Ende der Leitungsanordnung eine einstellbare Federspannvorrichtung vorgesehen. Diese kann durch eine Federhalteeinrichtung gebildet werden, welche das Zugfederende bzw. die Zugfederenden festhält und gegenüber einer Leitungshalteeinrichtung, welche das zugehörigen Ende der Leitungsanordnung festhält, in Zugfederlängsrichtung relativ bewegbar und in unterschiedlichen Abständen von der Leitungshalteeinrichtung lösbar fixierbar ist.

Die Erfindung wird nun anhand von Ausführungsformen näher erläutert. In den Zeichnungen zeigen:
- Fig. 1: eine schematische Darstellung eines erfindungsgemäßen Schleppkettenersatzes;
- Fig. 2: einen Ausschnitt aus einem Bandkabel mit zwei Federaufnahmekanälen und zwei Zugfedern; und
- Fig. 3: einen Ausschnitt aus einem Rundkabel mit einem Federaufnahmekanal und mit einer Zugfeder.

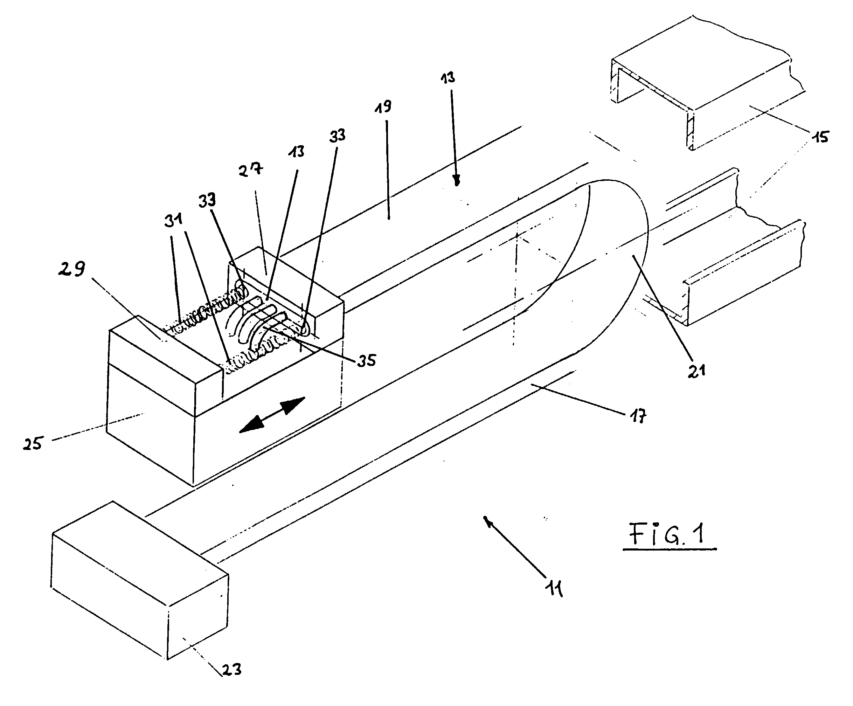

Fig. 1 zeigt eine schematische Schrägansicht eines erfindungsgemäßen Schleppkettenersatzes 11 mit einer Leitungsanordnung in Form eines Bandkabels 13, das in einem nur teilweise dargestellten Kabelkanal 15 geführt ist. Das Bandkabel 13 erstreckt sich in horizontaler Richtung und weist ein Untertrum 17 und ein Obertrum 19 auf, die über einen Verbindungsbogen 21 mit Abstand voneinander ineinander übergehen.

Das vom Verbindungsbogen 21 entfernte Ende des Untertrums 17 ist mit einer feststehenden Einrichtung 23 verbunden. Das vom Verbindungsbogen 21 abliegende Ende des Obertrums 19 ist mit einer beweglichen Einrichtung 25 - auch Laufkatze genannt - verbunden. Die Laufkatze 25 ist in Längsrichtung des Bandkabels 13 horizontal hin- und herbeweglich, wie durch einen Doppelpfeil an der Laufkatze 25 angedeutet ist. Das Ende des Obertrums ist in einer Kabelhalterung 27 festgelegt, die mit der Laufkatze 25 fest verbunden ist. Der Kabelhalterung 27 mit Abstand gegenüberliegend ist an der Laufkatze 25 eine Federhalterung 29 angeordnet, von der die Enden zweier Schraubenfedern 31 festgehalten sind. Die Federhalterung 29 ist vorzugsweise in Längserstreckungsrichtung der Schraubenfedern 31 auf der Laufkatze 25 relativ zur Kabelhalterung 27 verschiebbar angeordnet (nicht dargestellt). Dabei ist die Federhalterung 29 in vorbestimmten oder beliebigen Verschiebungsstellungen relativ zur Kabelhalterung 27 in lösbarer Weise festlegbar.

Die Federn 31 erstrecken sich aus zwei Federaufnahmekanälen 33 heraus, die an je einer Längsseite des Bandkabels 13 in dessen Längsrichtung durch das gesamte Bandkabel 13 hindurchlaufen und an ihren anderen Enden an der feststehenden Einrichtung 23 festgelegt sind (nicht dargestellt).

Das Bandkabel 13 weist mehrere elektrische Leiter 35 auf, die aus dem in der Kabelhalterung 27 festgelegten Ende des Bandkabels 13 austreten und mit elektrischen Einrichtungen (nicht gezeigt) der Laufkatze 25 verbunden sind.

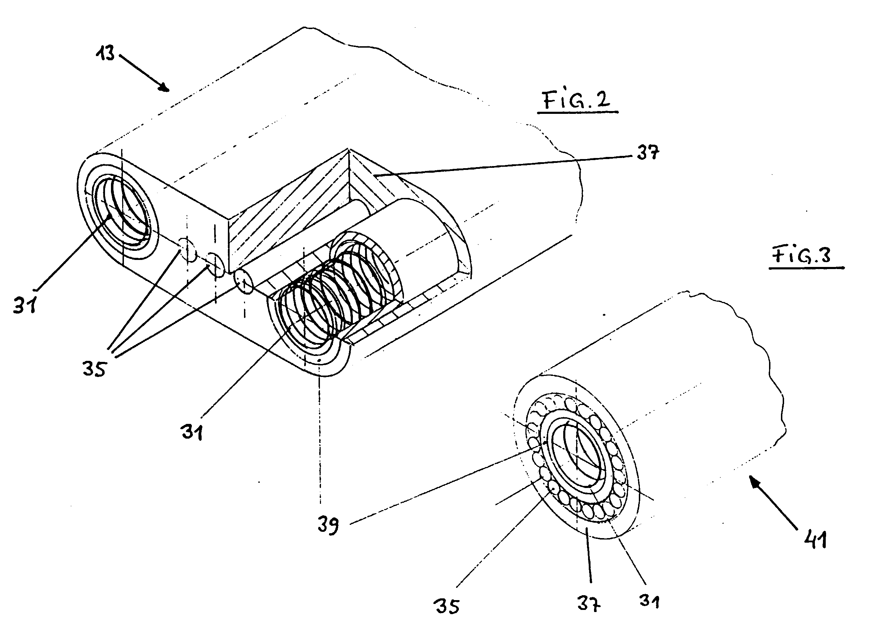

Fig. 2 zeigt einen Abschnitt des Bandkabels 13, teilweise aufgeschnitten. Aus dieser Darstellung gehen Einzelheiten des Aufbaus des Schleppkettenersatzes hervor. Bei der in den Fig. 1 und 2 dargestellten Ausführungsform weist das Bandkabel 13 drei elektrische Leiter 35 auf. Diese liegen in einer Ebene nebeneinander und sind in einen bandförmigen Isoliermantel 37 eingebettet. An den beiden Längsseiten des Bandkabels ist in den Isoliermantel 37 je ein Federaufnahmeschlauch 39 eingebettet. In jedem der beiden Federaufnahmeschläuchen 39 erstreckt sich eine der beiden Schraubenfedern 31. Die Federaufnahmeschläuche 39 können in den Kunststoffmantel 37 einextrudiert sein.

Die Federaufnahmekanäle 33 können auch direkt durch beim Extrudiervorgang gebildete Rohrkanäle gebildet sein, in denen die Schraubenfedern 31 direkt verlaufen, ohne eingebettete Federaufnahmeschläuche 39.

Fig. 3 zeigt eine Ausführungsform eines Rundkabels 41 mit einer einzigen, in der Mitte des Rundkabels 41 verlaufenden Schraubenfeder 31. Diese verläuft in einem einzigen Federaufnahmeschlauch 39. Koaxial zu der Schraubenfeder 31 sind um den Federaufnahmeschlauch 39 herum elektrische Leiter 35 angeordnet. Diese werden von einem Isoliermantel 37 konzentrisch umgeben.

Die Kabelhalterung 27 und die Federhalterung 29 sind vorzugsweise an einer gemeinsamen Halterung (nicht dargestellt) montiert, die Kabelhalterung 27 fest und die Federhalterung 29 verschiebbar, wobei die gemeinsame Halterung an der Laufkatze 25 befestigbar ist.

Vor der Montage des Schleppkettenersatzes befinden sich die Zugfedern 31 im nichtgespannten Zustand. Das Bandkabel 13 ist dann wie ein gewöhnliches Kabel handhabbar. Erst nach der Montage der gemeinsamen Halterung bzw. der Kabelhalterung 27 und der Federhalterung 29 an der Laufkatze 25 werden die Schraubenfedern 31 gespannt, indem die Federhalterung 29 von der Kabelhalterung 27 in Erstreckungsrichtung der Schraubenfedern 31 soweit wegbewegt wird, bis die erforderliche Federspannung erreicht ist. Durch beliebiges Verschieben der Federhalterung 29 kann eine beliebige Federvorspannung eingestellt werden. Die erfindungsgemäße Lösung erlaubt sogar, nach einer beliebigen Betriebszeit des Schleppkettenersatzes die Federspannung zu ändern, beispielsweise weil sich die zuerst eingestellte Vorspannung als nicht optimal erweist.

Der Kabelkanal 15 ist empfehlenswert, um ein Ausbrechen des unter Federvorspannung stehenden Kabels zu verhindern, das beispielsweise bei dem in Fig. 3 gezeigten Rundkabel 41 mit mittiger Schraubenfeder 39 ohne eine solche seitliche Führung auftreten könnte.

Es besteht auch die Möglichkeit, in jedem Federaufnahmekanal 33 mehrere Zugfedern unterzubringen, beispielsweise mehrere zueinander koaxiale Schraubenfedern mit unterschiedlichem Durchmesser, die ineinander geschachtelt sind, oder mehrere Schraubenfedern, die nach Art mehrerer Leiter eines Kabels nebeneinander verlaufend in dem Federaufnahmekanal angeordnet sind.

## Patentansprüche

1. Schleppkettenersatz (11) in Form einer Leitungsanordnung mit einem ersten Trum (17) und einem parallel dazu verlaufenden zweiten Trum (19),
wobei die beiden Trumenden mit einer feststehenden Einrichtung (23) bzw. mit einer in Längsrichtung der Leitungsanordnung hin- und herbeweglichen Einrichtung (25) verbunden sind und die beiden Trums (17, 19) dazwischen bogenartig (21) ineinander übergehen und wobei die Leitungsanordnung mit einer die beiden Trums (17, 19) auf Abstand voneinander haltenden Federeinrichtung (31) versehen ist, die sich in Längsrichtung der Leitungsanordnung mit dieser miterstreckt und hierzu in einer entlang der Leitungsanordnung verlaufenden Federaufnahmekanaleinrichtung (33, 39) angeordnet ist,
dadurch gekennzeichnet,
daß die Federeinrichtung durch mindestens eine in Längsrichtung der Leitungsanordnung vorspannbare Zugfeder (31) gebildet ist.

2. Schleppkettenersatz (11) nach Anspruch 1,
dadurch gekennzeichnet, daß die Zugfeder durch eine Schraubenfeder (31) gebildet ist.

3. Schleppkettenersatz (11) nach Anspruch 1 oder 2, dadurch gekennzeichnet, daß die Leitungsanordnung durch ein Rundkabel (41) gebildet ist, in dessen Mitte eine Federaufnahmekanaleinrichtung (33, 39) in Form eines einzigen Federaufnahmekanals (33) für eine Zugfeder (31) verläuft.

4. Schleppkettenersatz (11) nach einem der Ansprüche 1 bis 3, dadurch gekennzeichnet, daß die Leitungsanordnung durch ein Rundkabel (41) gebildet ist, dessen Federaufnahmekanaleinrichtung an zwei sich an zwei sich diametral gegenüberliegenden Seiten Seiten des Rundkabels (41) (41) je eineneinen Federaufnahmekanal (33) Federaufnahmekanal (33) aufweist.

5. Schleppkettenersatz (11) nach Anspruch 1 oder 2, dadurch gekennzeichnet, daß die Leitungsanordnung durch ein Bandkabel (13) gebildet ist, dessen Federaufnahmekanaleinrichtung an beiden Längsseiten des Bandkabels (13) je einen Federaufnahmekanal (33) aufweist, in denen je eine Zugfeder (31) untergebracht ist.

6. Schleppkettenersatz (11) nach einem der Ansprüche 3 bis 5, dadurch gekennzeichnet, daß in jedem Federaufnahmekanal (33) mehrere Zugfedern (31) untergebracht sind.

7. Schleppkettenersatz (11) nach einem der Ansprüche 3 bis 6, dadurch gekennzeichnet, daß der Federaufnahmekanal (33) in einen Kunststoffkern des Rundkabels (41) bzw. die Federaufnahmekanäle (33) in einen Kunststoffmantel (37) des Rundkabels (41) bzw. des Bandkabels (13) extrudiert ist bzw. sind.

8. Schleppkettenersatz (11) nach einem der Ansprüche 3 bis 6, dadurch gekennzeichnet, daß der Federaufnahmekanal (33) durch einen Federaufnahmeschlauch (39) in der Mitte des Rundkabels (41) bzw. die Federaufnahmekanäle (33) durch je einen Federaufnahmeschlauch (39) an den Längsseiten des Rundkabels (41) bzw. des Bandkabels (13) gebildet ist bzw. sind.

9. Schleppkettenersatz (11) nach einem der vorausgehenden Ansprüche, dadurch gekennzeichnet, daß an dem mit der festen Einrichtung (23) verbundenen Ende und/oder an dem mit der beweglichen Einrichtung (25) verbundenen Ende der Leitungsanordnung eine einstellbare Federspannvorrichtung (27, 29) vorgesehen ist.

10. Schleppkettenersatz (11) nach Anspruch 9, dadurch gekennzeichnet, daß die einstellbare Federspannvorrichtung (27, 29) eine Leitungshalterung (27) zum Festhalten des zugehörigen Leitungsanordnungsendes und eine bewegliche Federhalteeinrichtung (29) zum Festhalten des zugehörigen Endes der Zugfeder bzw. Zugfedern (31) aufweist und daß die Federhalteeinrichtung (29) in Zugefederlängsrichtung relativ zur Leitungshalteeinrichtung (27) bewegbar und in unterschiedlichen Abständen von der Leitungshalteeinrichtung lösbar fixierbar ist.

## Claims

1. A dragchain replacement (11) in the form of a line assembly comprising a first length (17) and a second length (19) extending parallel thereto, the two length ends being connected to a stationary means (23) and to a means (25), respectively, that is reciprocable in the longitudinal direction of the line assembly, and the two lengths (17, 19) merging with each other therebetween in arc-shaped manner (21), and the line assembly being provided with a spring means (31) which holds the two lengths (17, 19) spaced apart and extends in the longitudinal direction of the line assembly along with the latter and to this end is disposed in a spring receiving channel means (33, 39) extending along the line assembly,
characterized in that the spring means is constituted by at least one tension spring (31) adapted to be biased in the longitudinal direction of the line assembly .

2. A dragchain replacement (11) according to claim 1,
characterized in that the tension spring is constituted by a helical spring (31).

3. A dragchain replacement (11) according to claim 1 or 2,
characterized in that the line assembly is constituted by a round cable (41) having in the centre thereof a spring receiving channel means (33, 39) in the form of one single spring receiving channel (33) for a tension spring (31).

4. A dragchain replacement (11) according to any one of claims 1 to 3,
characterized in that the line assembly is constituted by a round cable (41) whose spring receiving channel means comprises one spring receiving channel (33) each on two diametrically opposed sides of the round cable (41).

5. A dragchain replacement (11) according to claim 1 or 2,
characterized in that the line assembly is constituted by a ribbon cable (13) whose spring receiving channel means comprises one spring receiving channel (33) each on both longitudinal sides of the ribbon cable (13), each spring receiving channel (33) accommodating one tension spring (31).

6. A dragchain replacement (11) according to any one of claims 3 to 5,
characterized in that each spring receiving channel (33) accommodates a plurality of tension springs (31) .

7. A dragchain replacement (11) according to any one of claims 3 to 6,
characterized in that the spring receiving channel (31) is extruded in a plastics core of the round cable (41), or the spring receiving channels (33) are extruded in a plastics jacket (37) of the round cable (41) or the ribbon cable (13), respectively.

8. A dragchain replacement (11) according to any one of claims 3 to 6,
characterized in that the spring receiving channel (33) is constituted by a spring receiving hose (39) in the centre of the round cable (41), or the spring receiving channels (33) are each constituted by a spring receiving hose (39) on the longitudinal sides of the round cable (41) or the ribbon cable (13), respectively.

9. A dragchain replacement (11) according to any one of the preceding claims,
characterized in that an adjustable spring tensioning means (27, 29) is provided on the end connected to the stationary means (23) and/or on the end connected to the movable means (25).

10. A dragchain replacement (11) according to claim 9, characterized in that the adjustable spring tensioning means (27, 29) comprises a line support (27) for retaining the associated line assembly end and a movable spring retaining means (29) for retaining the associated end of the tension spring or springs (31), and in that the spring retaining means (29) is movable in the longitudinal direction of the tension spring in relation to the line supporting means (27) and is adapted to be releasably fixed in different distances from the line supporting means.

## Revendications

1. Organe de remplacement de chaîne traînante (11) sous forme d'une disposition de ligne, comportant un premier brin (17) et un second brin (19) orienté parallèlement au premier, organe dans lequel les deux extrémités de brin sont reliées à un dispositif fixe (23) ou à un dispositif (25) à mouvement de va-et-vient selon la direction longitudinale de la disposition de ligne et dans lequel les deux brins (17, 19) se convertissent entre-temps l'un en l'autre à la façon d'un arc (21) et dans lequel la disposition de ligne est munie d'un dispositif de ressort (31) qui maintient les deux brins (17, 19) à une certaine distance l'un de l'autre, se déploie selon la direction longitudinale de la disposition de ligne, avec celle-ci, et, dans ce but, est disposé dans un dispositif (33, 39) de canal de réception de ressort courant le long de la disposition de ligne,
caractérisé
par le fait que le dispositif de ressort est formé par au moins un ressort de traction (31) qui peut se précontraindre selon la direction longitudinale de la disposition de ligne.

2. Organe de remplacement de chaîne traînante (11) selon la revendication 1, caractérisé par le fait que le ressort de traction est formé par un ressort hélicoïdal (31).

3. Organe de remplacement de chaîne traînante (11) selon la revendication 1 ou 2, caractérisé par le fait que la disposition de ligne est formée par un câble rond (41) au milieu duquel passe un dispositif (33, 39) de canal de réception de ressort sous forme d'un unique canal (33) de réception de ressort pour un ressort de traction (31).

4. Organe de remplacement de chaîne traînante (11) selon l'une des revendications 1 à 3, caractérisé par le fait que la disposition de ligne est formée par un câble rond (41) dont le dispositif de canal de réception de ressort présente, de chacun des deux côtés, diamétralement opposés, du câble rond (41), un canal de réception de ressort (33).

5. Organe de remplacement de chaîne traînante (11) selon la revendication 1 ou 2, caractérisé par le fait que la disposition de ligne est formée par un câble plat (13) dont le dispositif de canal de réception de ressort présente, de chacun des deux côtés longitudinaux du câble plat (13), un canal de réception de ressort, canaux dans chacun desquels est logé un ressort de traction (31).

6. Organe de remplacement de chaîne traînante (11) selon l'une des revendications 3 à 5, caractérisé par le fait que dans chaque canal de réception de ressort (33) sont logés plusieurs ressorts de traction (31).

7. Organe de remplacement de chaîne traînante (11) ) selon l'une des revendications 3 à 6, caractérisé par le fait que le canal (33) de réception de ressort est extrudé dans un noyau plastique du câble rond (41) ou que les canaux (33) de réception de ressort sont extrudés dans une enveloppe plastique (37) du câble rond (41) ou du câble plat (13).

8. Organe de remplacement de chaîne traînante (11) selon l'une des revendications 3 à 6, caractérisé par le fait que le canal (33) de réception de ressort est formé par un tube souple (39) de réception de ressort dans le milieu du câble rond (41) ou que les canaux (33) de réception de ressort sont chacun formés par un tube souple (39) de réception de ressort le long des côtés longitudinaux du câble rond (41) et du câble plat (13).

9. Organe de remplacement de chaîne traînante (11) selon l'une des revendications précédentes, caractérisé par le fait qu'à l'extrémité reliée au dispositif fixe (23) et/ou à l'extrémité reliée au dispositif mobile (25) de la disposition de ligne est prévu un mécanisme réglable (27, 29) de contrainte du ressort.

10. Organe de remplacement de chaîne traînante (11) selon la revendication 9, caractérisé par le fait que le mécanisme réglable (27, 29) de contrainte de ressort présente un dispositif (27) de maintien de ligne pour fixer l'extrémité correspondante de la disposition de ligne et un dispositif mobile (29) de maintien de ressort pour fixer l'extrémité correspondante du ressort de traction ou des ressorts de traction (31) et que le dispositif (29) de maintien du ressort peut se déplacer, selon la direction longitudinale du ressort de traction, par rapport au dispositif (27) de maintien de ligne et peut se fixer, de façon détachable, à différentes distances du dispositif de maintien de ligne.
